# FASCICULE DE BREVET EUROPEEN

(11) **EP 2 114 726 B1**
(45) Date de publication et mention de la délivrance du brevet: **08.10.2014**
(21) Numéro de dépôt: 07712636.5
(22) Date de dépôt: 05.01.2007
(51) Int. Cl.: B60P 3/38, B60R 9/055

(54) **TENTE DE TOIT DEPLIABLE POUR VEHICULE AUTOMOBILE, AVEC UN COFFRE ACCESIBLE DE L'INTERIEUR COMME DE L'EXTERIEUR DE LA TENTE. TENTE DE TOIT DEPLIABLE POUR VEHICULE AUTOMOBILE AVEC CIRCULATION D'AIR DANS LA REGION DU TOIT DE LA TENTE**
FALTBARES DACHZELT FÜR FAHRZEUGE, MIT EINEM GEPÄCKFACH, WELCHES VON AUSSEN UND VOM ZELTINNERN ZUGÄNGLICH IST. FALTBARES DACHZELT FÜR FAHRZEUGE MIT LÜFTUNG IM DACHBEREICH DES ZELTES
FOLDING ROOF TENT FOR MOTOR VEHICLE COMPRISING A COMPARTMENT ACCESSIBLE FROM BOTH THE INSIDE AND OUTSIDE OF THE TENT. FOLDING ROOF TENT FOR MOTOR VEHICLE COMPRISING VENTILATION IN THE ROOF AREA OF THE TENT

(30) Priorité: 09.01.2006 FR 0600163
(43) Date de publication de la demande: 11.11.2009
(73) Titulaire: Brochier, Patrice Jean-Marie Alain, 30340 Saint Privat des Vieux (FR); Soteau, Christian, 91270 Vigneux sur Seine (FR)
(72) Inventeur: Brochier, Patrice Jean-Marie Alain, 30340 Saint Privat des Vieux (FR); Soteau, Christian, 91270 Vigneux sur Seine (FR)
(86) Numéro de dépôt international: PCT/FR2007/000010
(87) Numéro de publication internationale: WO 2007/080298

(56) Documents cités:
- EP-A- 0 135 458
- FR-A- 2 085 386
- GB-A- 1 011 725
- US-A- 4 548 438

## Description

La présente invention concerne une tente de toit dépliable pour véhicule automobile.

Une telle tente est connue du document EP 0135 458 A.

Les tentes de toit actuellement connues ou commercialisées, lorsqu' elles sont fermées, ne permettent pas d'accéder aux bagages stockés à l'intérieur de la tente sans devoir ouvrir cette dernière. L'utilisateur est donc contraint de sortir de la tente pour accéder à ses bagages stockés dans le véhicule. Or l'action de sortir d'une tente de toit pour aller chercher dans ses bagages rangés dans sa voiture n'est pas aisé, et peut devenir un grave inconvénient dans certains cas. Par exemple, pour aller chercher quelque chose que l'on a oublié dans son sac (médicament, lampe de poche, pyjama...), l'utilisateur doit redescendre l'échelle, mettre ses chaussures, ouvrir le coffre de son véhicule, chercher dans son sac, etc... Si en plus il pleut, cela devient particulièrement problématique. De surcroit, l'utilisateur ne peut pas ramener son sac dans la tente, car celui-ci empièterait sur la surface de couchage, unique surface disponible dans les tentes de toits actuelles.

Le principe utilisé par l'invention permet de remédier à cet inconvénient.

Une partie de la tente de toit est constituée d'un coffre muni d'un accès s'ouvrant de l'extérieur. Une autre ouverture permet l'accès à ce coffre depuis l'intérieur de la tente.

Ainsi, l'utilisateur de la tente de toit peut à tout moment accéder à la partie coffre pour y mettre ou y prendre ses bagages grâce l'accès extérieur, alors que la tente est fermée, en position de roulage. Et lorsque la tente est ouverte, position habitable véhicule stationné, l'utilisateur à l'intérieur de la tente peut accéder à ce même coffre à bagage sans devoir sortir de la tente, en utilisant un accés intérieur, qui peut être équipé ou non d'une séparation amovible. Ses bagages sont alors à sa disposition, sans empiéter sur le volume habitable ou la surface de couchage de la tente. Ce coffre peut se trouver à l'opposé ou sur l'un des cotés de l'entrée de la tente de toit

### Les dessins annexés en 8 planches illustrent l'invention :

La figure 1 représente la tente fermée montée sur un véhicule (vue latérale)
La figure 2 représente une demi-coupe A et B.
La figure 3 représente une demi-coupe C.
La figure 4 représente le détail J de la demi-coupe C.
La figure 5 représente la tente ouverte montée sur 2 types de véhicule (vue latérale).

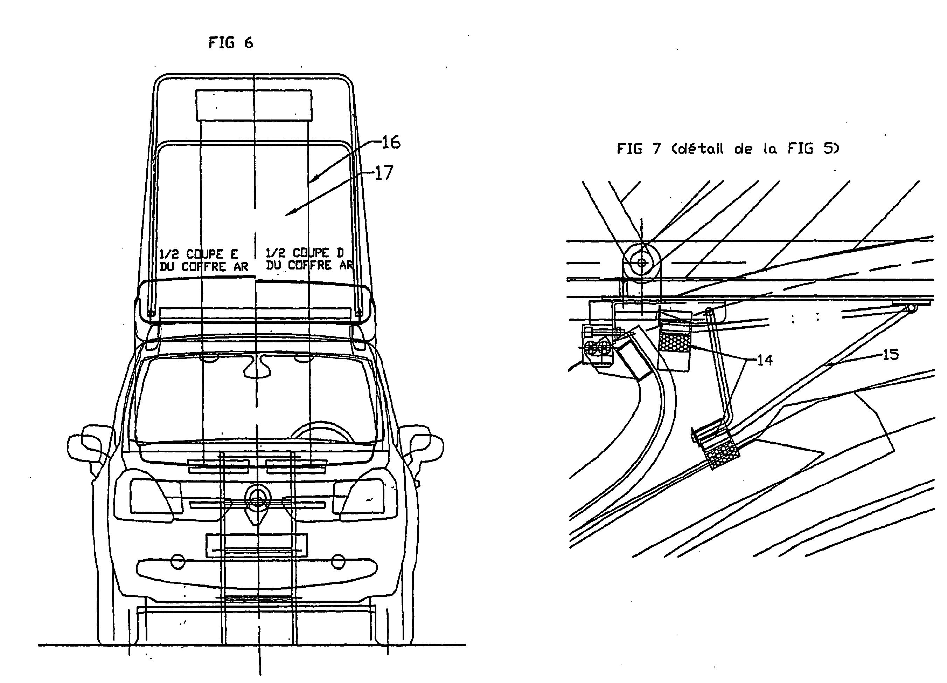

La figure 6 représente la tente ouverte (vue de face).
La figure 7 représente un détail de la figure 5 et un appui 14.
La figure 8 représente une vue des barres de torsion et des charnières (vue de face)
Les figures 9 représentent les barres de torsion vues de coté suivant la coupe GG.
La figure 10 montre le détail H de la figure 8.

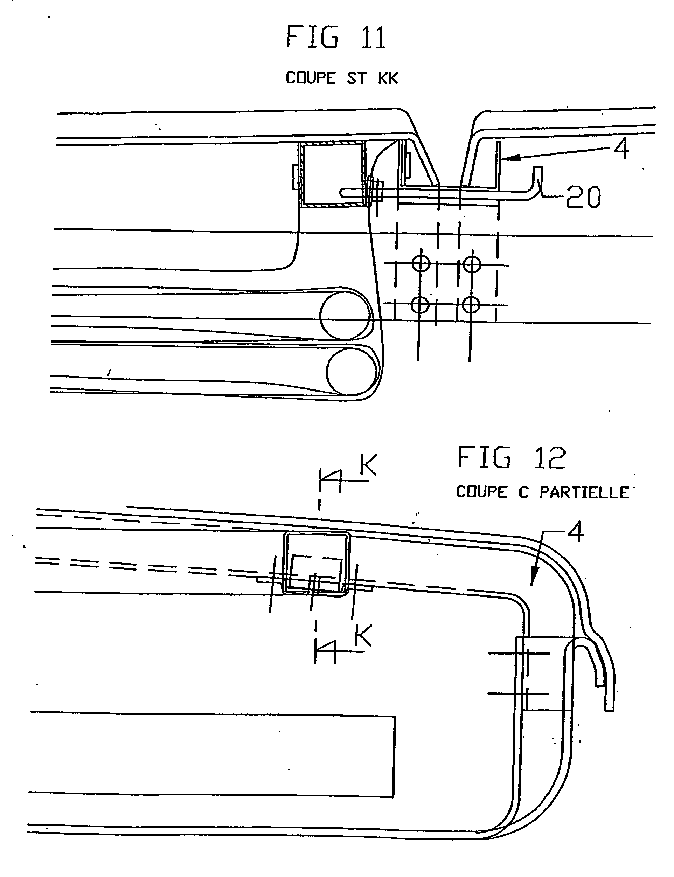

La figure 11 représente la coupe KK du pontet (4) et du verrou (20).
La figure 12 montre une coupe C partielle (FIG 3).
La figure 13 représente une tente de toit fermée sur un véhicule (vue latérale).
La figure 14 représente une tente de toit ouverte sur un véhicule (vue latérale) avec le coffre ouvert dans un agrandissement.
La figure 15 représente une tente de toit fermée sur un véhicule (vue de face).
La figure 16 représente une tente de toit en cours d'ouverture sur un véhicule (vue de face).
La figure 17 représente une tente de toit ouverte sur un véhicule vue de face.

### Une façon exemplaire de réaliser l'invention peut être la suivante :

La tente de toit dispose d'un couvercle rigide (2) basculant sur l'avant pour la manoeuvre d'ouverture/fermeture d'environ 200°autour d'un axe horizontal situé approximativement à l'avant du toit, ce couvercle entraîne dans ce mouvement le déploiement de flancs latéraux verticaux et du plafond de la tente, créant ainsi un grand volume habitable situé au dessus du capot et du toit du véhicule.

La tente de toit se fixe sur les barres de toit du véhicule.

La base (1) est une pièce en résine stratifiée ou (co)polymère thermoformée (ABS, PVC, etc..) ; elle est rigidifiée dans sa partie plane par un panneau sandwich collé ou noyé. Une équerre de renfort en tôle d'aluminium est fixée sur sa partie avant et reçoit les parties fixes de l'axe d'articulation (21), les supports appuis (14). Elle comporte les supports d'arceaux (5 et 6).

Le couvercle (2) est une pièce en résine stratifiée ou (co)polymère thermoformée (ABS, PVC, etc..) ; elle est rigidifiée par un cadre métallique fixé, collé ou noyé selon la mise en oeuvre. Le cadre supporte le plancher articulé (8), l'échelle (11) par les biellettes (23), les fixations de bouclier (15), et les paliers mobiles/guides ressorts (18), lesquels maintiennent les barres de torsion (13).

Le couvercle de coffre arrière (3) est une pièce en résine stratifiée ou (co)polymère thermoformée (ABS, PVC, etc..) ; il est fixé sur la base par le biais de 2 ergots anti-soulèvement à l'avant et d'un verrou à clé ¼ de tour (19) à l'arrière.

Il y a un pontet (4) dont la forme en U cintré et la fixation sur la base assure une rigidité du coffre ainsi que le rôle de gouttière avec le couvercle (2) de tente fermé d'une part, et avec le couvercle (3) de coffre d'autre part. Ce pontet métallique (4) fixé sur la base (1) supporte les 2 verrous (20).

Les deux arceaux (5 et 6) sont en tube métallique cintré.

Un volet de lit (7) est articulé par une charnière fixée sur la base. Il peut être constitué d'un panneau sandwich. Il est supporté par 2 béquilles métalliques (9).

Un plancher (8) est constitué d'un panneau sandwich ou caillebotis. Il est supporté par 2 béquilles métalliques (10).

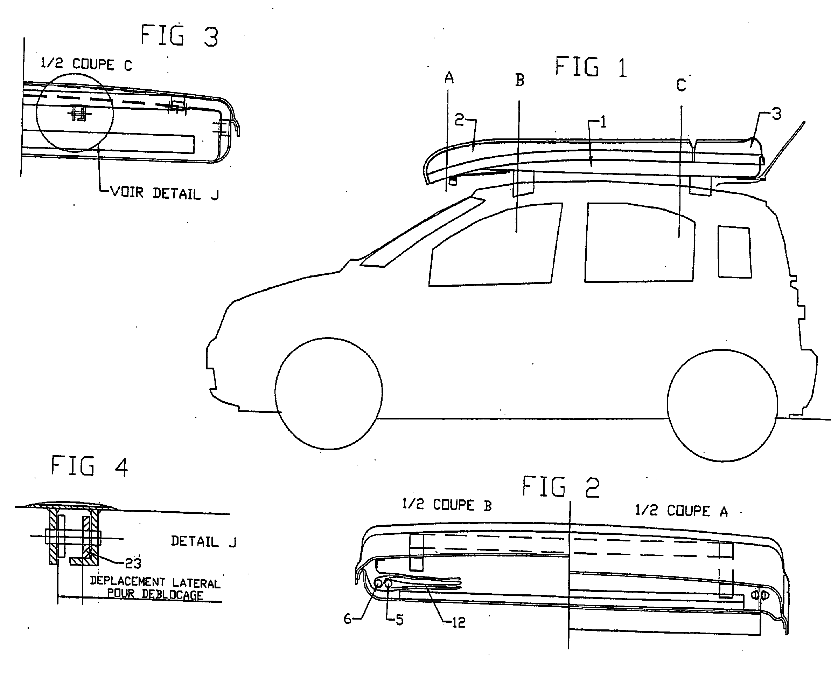

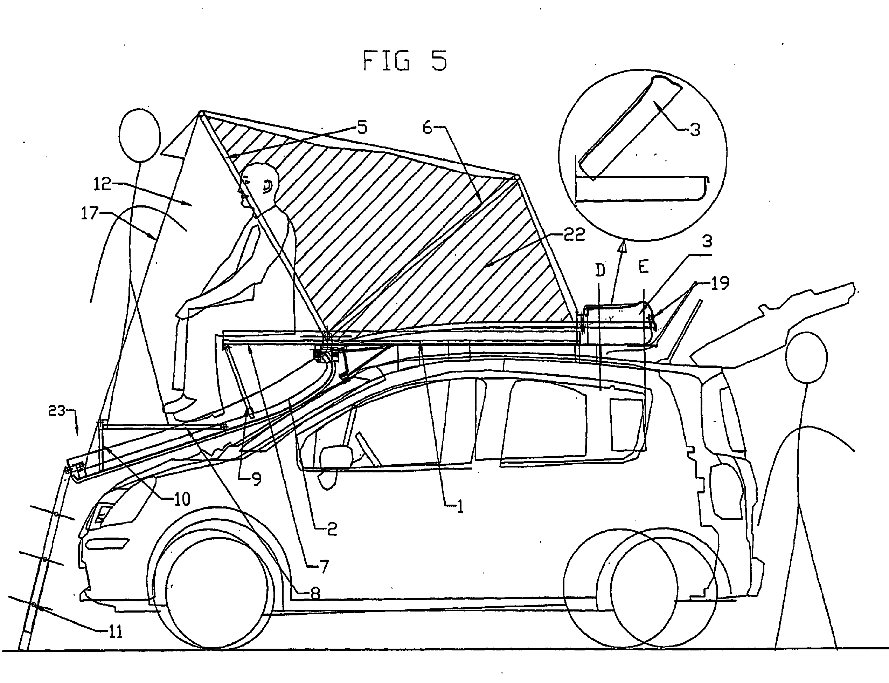

Une échelle (11) est fixée sur le cadre (2) par l'intermédiaire de 2 biellettes (23) servant à projeter l'axe de fixation de l'échelle en dehors du module, ce qui permet de la sortir et de la rentrer du couvercle (2). Un support anti-soulèvement maintient l'échelle en position bloquée sortie (voir FIG 4 et 5). Elle est ajustable en hauteur par 2 manchons réglables. Elle est fixée sur le plancher (8) par une attache quand elle est repliée.

La toile (12) du module est fixée tout le long de la base (1), du pontet (4) et du couvercle (2), de manière étanche. Elle est équipée de 2 oeillets oblongs pour le passage des verrous (20). Les oeillets sont protégés de la pluie par un rabat de toile.

La toile sombre (22) est fixée à la toile (12) avec un système velcro.

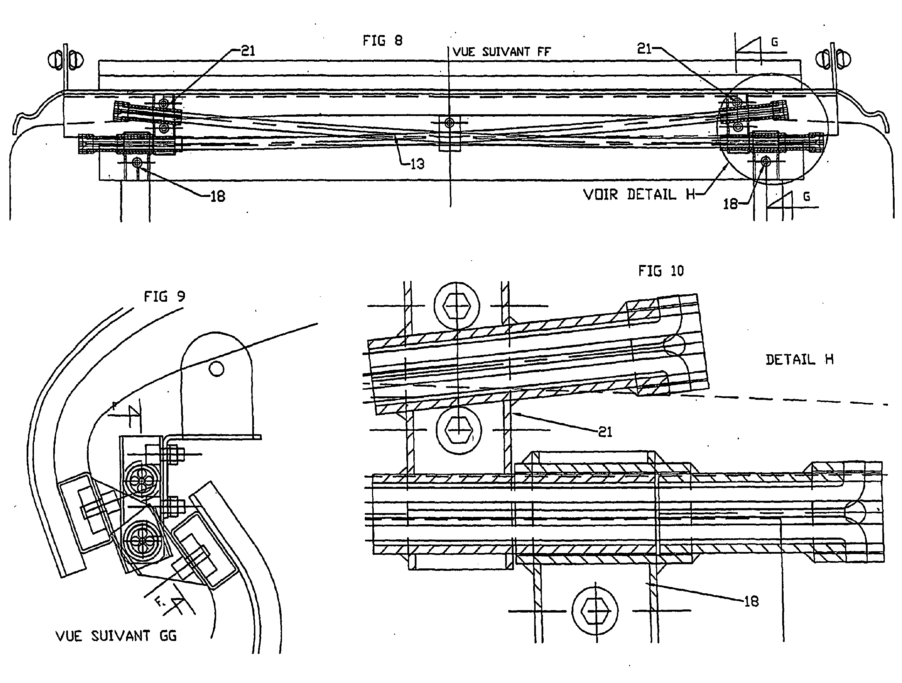

La tente de toit est équipée d'une ou plusieurs barres de torsion (13) élastiques (voir figure 8) ou d'une ou plusieurs plaques de flexion placées sur, ou à proximité immédiate, de l'axe pivot entre la base (1) et le couvercle (2), l'équilibrage partiel du poids du couvercle et des accessoires étant alors assuré lors de la manoeuvre d'ouverture / fermeture.

Les barres de torsion (13) sont constituées de 4 cordes à piano tournant autour d'un jonc métallique ou polyamide. Les embouts des cordes à piano sont cintrés pour être entraînés ou bloqués en rotation par les paliers mobile (18) ou les axes charnières fixes (21).

La tente de toit est équipée d'un patin (14) dont la fonction d'appui sur le pare-brise permet de reprendre le porte à faux de la base (1) sur le véhicule.

Le patin d'appui (14) est constitué d'un tube rectangulaire en aluminium cintré équipé sur sa face d'appui d'un profil en caoutchouc collé. Il est monté, articulé, sur une tringle (15) en rond plié. Deux béquilles reprennent les efforts d'appui.

Deux sangles (16) sont fixées sur les arceaux (5 et 6) et sur le couvercle (2) ainsi que sur le pontet (4).

Selon une variante illustrée sur la FIG 5 le coffre arrière peut être plus volumineux.

Le module selon l'invention est particulièrement destiné à ceux qui veulent faire du camping itinérant en voiture

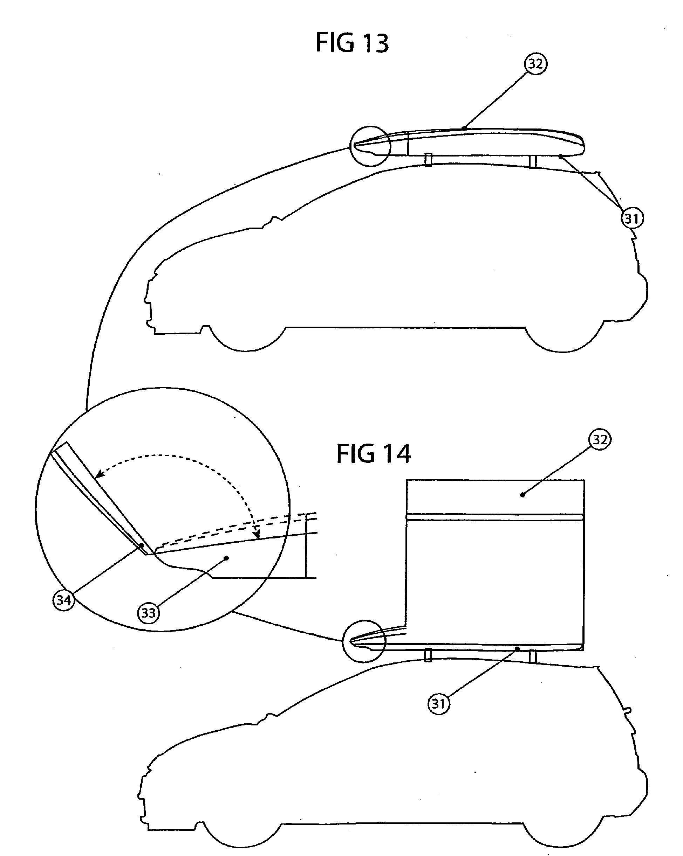

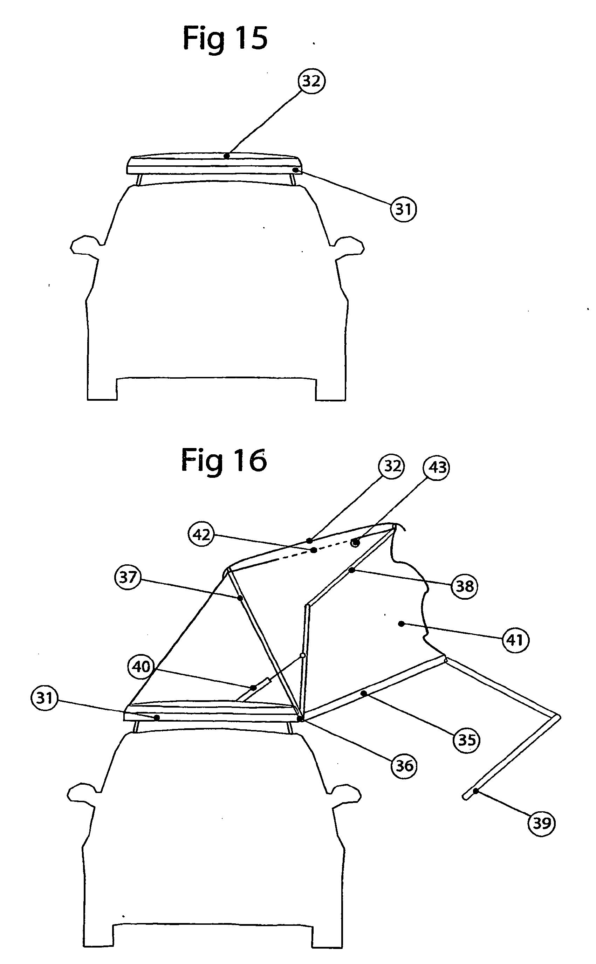

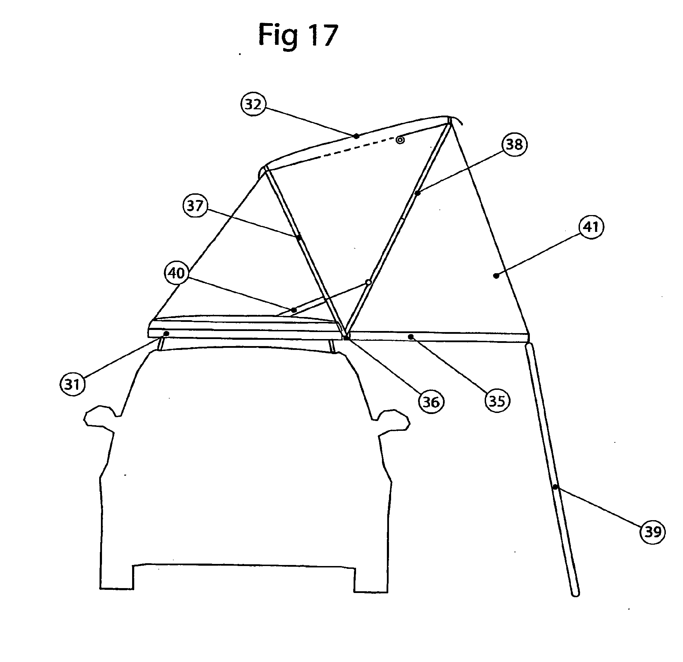

### Une autre façon exemplaire de réaliser l'invention peut être la suivante (voir figures 13-17):

La tente de toit dispose d'un couvercle rigide (32) s'élevant au-dessus de la base (31) lors de la manoeuvre d'ouverture/fermeture au moyen de quatre supports (37 et 38) articulés dont deux en forme de compas (38), formant alors le toit de la tente, tandis qu'un plancher (35) de surface et de forme similaire à la base (33) se déplie sur un coté à 180 degrés, s'appuyant sur l'échelle d'accès (39), entraînant dans ce mouvement le déploiement des flancs latéraux de la tente (41) et formant un plancher au niveau de la base de la tente de toit, l'ensemble ouvert offrant un volume suffisant pour le couchage de deux personnes.

La tente de toit se fixe sur les barres de toit du véhicule.

La base (31) est une pièce en résine stratifiée ou (co)polymère thermoformée (ABS, PVC, etc..) ; elle est rigidifiée dans sa partie plane par un panneau sandwich collé ou noyé. Elle comporte sur l'avant, la base de la partie coffre à bagages (33). Elle comporte sur le coté une charnière (36) permettant d'articuler le plancher (35) et les supports (37 et 38).

Le couvercle (32) est une pièce en résine stratifiée ou (co)polymère thermoformée (ABS, PVC, etc...)

Le couvercle de coffre à bagages avant (34) est une pièce en résine stratifiée ou (co)polymère thermoformée (ABS, PVC, etc..) ; il est articulé sur la base (33) avec une charnière.

Une échelle (39) est fixée sur le plancher (35). Elle est ajustable en hauteur par 2 manchons réglables.

La toile (41) du module est fixée tout le long de la base (31),et du plancher (35).

La partie de la toile (41) constituant le plafond se situe sous le couvercle rigide (32) à une distance suffisante de celui-ci pour laisser l'air extérieur circuler entre couvercle et toile, et comporte une grande ouverture (42), munie ou non d'une moustiquaire, et modulable par un volet en toile (43), permettant ainsi de contrôler l'aération intérieure de la tente et éviter la condensation de l'humidité intérieure sur l'intérieur de toute la toile de la tente.

Deux ressorts à gaz (40) assistent l'ouverture.

La tente de toit selon l'invention est particulièrement destinée à ceux qui veulent faire du camping itinérant en voiture.

## Revendications

1. Tente de toit dépliable pour véhicule automobile **caractérisée en ce qu'**elle est équipée d'un coffre (33), utilisé notamment pour les bagages, dont l'accès depuis l'intérieur de la tente (41) et depuis l'extérieur quand celle-ci est fermée, est possible.

2. Tente de toit pour véhicule automobile avec un couvercle rigide (32) formant le toit de la tente lorsque celle-ci est ouverte **caractérisée en ce qu'**elle dispose d'une toile (41) dont la partie constituant le plafond se situe sous le couvercle rigide (32) à une distance suffisante de celui-ci pour laisser l'air extérieur circuler entre couvercle et toile et comporte une grande ouverture, munie ou non d'une moustiquaire, et modulable par un volet en toile, permettant ainsi de contrôler l'aération intérieure de la tente et éviter la condensation de l'humidité intérieure sur l'intérieur de toute la toile de la tente.

3. Tente de toit pour véhicule automobile selon la revendication 1 **caractérisée en ce que** le coffre (33) peut se trouver à l'opposé ou sur l'un des cotés de l'entrée de la tente de toit.

4. Tente de toit pour véhicule automobile selon les revendications 1 et 3 **caractérisée en ce qu'**elle dispose d'un couvercle rigide (2, 32), d'une base (1, 31) et d'un couvercle de coffre (3, 34).

5. Tente de toit pour véhicule automobile selon les revendications 1, 3 et 4, **caractérisée en ce qu'**elle est équipée d'un pontet (4) dont la forme en U cintré et la fixation sur la base (1) assure une rigidité du coffre ainsi que le rôle de gouttière avec le couvercle rigide (2) fermé d'une part, et avec le couvercle de coffre (3, 34) d'autre part.

6. Tente de toit pour véhicule automobile selon les revendications 1, 3, 4 et 5 **caractérisée en ce qu'**elle dispose d'un couvercle rigide (2) basculant sur l'avant pour la manoeuvre d'ouverture/fermeture d'environ 200°autour d'un axe horizontal situé approximativement à l'avant du toit, ce couvercle rigide entraîne dans ce mouvement le déploiement de flancs latéraux verticaux et du plafond de la tente, pouvant créer ainsi un grand volume habitable situé au dessus du capot et du toit du véhicule.

7. Tente de toit pour véhicule automobile selon les revendications 1, 3, 4, 5 et 6 **caractérisée en ce qu'**elle est équipée d'un patin (14) dont la fonction d'appui sur le pare-brise permet de reprendre le porte à faux de la base (1) sur le véhicule.

8. Tente de toit pour véhicule automobile selon les revendications 1, 2, 3 et 4 **caractérisée en ce que** le couvercle rigide (32) s'élève au-dessus de la base (31) lors de la manoeuvre d'ouverture/fermeture au moyen de quatre supports articulés dont deux en forme de compas (38), formant alors le toit de la tente, tandis qu'un plancher (35) de surface et de forme similaire à la base se déplie sur un coté à 180 degrés, s'appuyant sur une échelle d'accès (39), entraînant dans ce mouvement le déploiement des flancs latéraux de la tente et formant un plancher au niveau de la base (31) de la tente de toit, l'ensemble ouvert offrant un volume suffisant pour le couchage de deux personnes.

9. Tente de toit pour véhicule automobile selon l'une quelconque des revendications 4 à 8 **caractérisée en ce qu'**elle est équipée d'une ou plusieurs barres de torsion (13) élastiques ou d'une ou plusieurs plaques de flexion placées sur, ou à proximité immédiate, de l'axe pivot entre la base et le couvercle rigide, l'équilibrage partiel du poids du couvercle rigide étant alors assuré lors de la manoeuvre d'ouverture / fermeture.

10. Tente de toit pour véhicule automobile selon l'une quelconque des revendications précédentes fixable sur les barres de toit desdits véhicules.

## Patentansprüche

1. Dachzelt aufklappbar für Kraftfahrzeug **dadurch gekennzeichnet** an dem ein zugehöriger Koffer (33) angebracht ist, insbesondere gebräuchlich für das Gepäck deren Zugang vom Innerem des Zeltes (41) und vom Äußeren im geschlossenen Zustand ermöglicht.

2. Dachzelt für Kraftfahrzeug mit einem stabilen Deckel (32) Zeltdach **dadurch gekennzeichnet dass** es im aufgestellten Zustand aus Stoffgewebe besteht (41) dessen Bestandteil sich unter dem stabilen Deckel befindet (32) der in einem ausreichenden Abstand angebracht ist und die äußere Luft zirkulieren lässt zwischen Deckel und Stoff und der eine große Öffnung beinhaltet, versehen oder nicht versehen mit einem Moskitonetz ,und dessen mit einem Stoffgewebe verschließbar ist,
das ebenso erlaubt die Innenbelüftung des Zeltes zu kontrollieren und die Kondensierung der Innenfeuchtigkeit auf das Innere des ganzen Zeltstoffes zu verhindern.

3. Dachzelt für Kraftfahrzeug gemäss der Anforderungen 1 **dadurch**
**gekennzeichnet dass** sich der Koffer entweder auf der Gegenseite oder auf einer der Eingangsseiten des Dachzeltes befindet.

4. Dachzelt für Kraftfahrzeug gemäss den Anforderungen 1 und 3 **dadurch**
**gekennzeichnet dass** es über ein stabiles Dach (2,32), verfügt mit einem Untergrund (1,31) und mit einem Kofferdeckel (3,34).

5. Dachzelt für Kraftfahrzeug gemäss den Anforderungen 1,3 und 4, **dadurch gekennzeichnet dass** es ausgerüstet ist mit einem Bügel in der Form eines gerundeten U und mit einer Fixierung an der Basis (1) die eine Stabilität des Koffers gewährleistet und gleichzeitig als Rinne dient mit einem stabilen Dach (2), geschlossen auf der einen Seite und mit dem Kofferdeckel (3,34) auf der anderen Seite.

6. Dachzelt für Kraftfahrzeug gemäss den Anforderungen 1,3,4 und 5 **dadurch gekennzeichnet dass** es über ein stabiles Dach (2) verfügt, kippbar nach vorne zur Öffnung bzw. Schließung um etwa 200° um eine horizontale Achse , die angebracht ist nahe der Vorder-seite des Daches ; dieses stabile Dach nimmt bei dieser Bewegung die Auffaltung der vertikalen Seitenflanken mit und das Dach des Zeltes und kann somit einen großen bewohnbaren Raum gestalten, der sich auf der Haube oder dem Dach befindet.

7. DachZelt für das Kraftfahrzeug gemäss den Anforderungen 1, 3 ,4 ,5 und 6 **dadurch gekennzeichnet dass** es ausgestattet ist mit einer Sohle (14) mit der Funktion sich auf die Windschutzscheibe zu stützen was erlaubt, den Träger abzunehmen von der Basis (1) auf das Fahrzeug.

8. Dachzelt für das Kraftfahrzeug gemäss den Anforderungen 1,2,3 und 4
**dadurch gekennzeichnet dass** das stabile Dach sich oberhalb des Untergrundes (31) aufklappen lässt zur Öffnung bzw. Schließung mit Hilfe der 4 bezeichneten Halterungen /Stützen von denen 2 die Form eines Zirkels (38) haben die somit das Dach des Zeltes formen solange wohingegen sich ein Boden (35) von der Oberfläche und einer ähnliche Form auf dem Untergrund aufklappt, auf einer Seite bei 180°, sich auf eine Zugangsleiter (39) stützend und bei dieser Bewegung die Entfaltung der beiden Seitenflanken mitnehmend und einen Boden bildend auf der Ebne des Untergrundes (31) des Dachzeltes ; das Ganze geöffnet, bietet einen ausreichenden Raum für den Liegeplatz von zwei Personen.

9. Dachzelt für das Kraftfahrzeug gemäss irgendeiner der Anforderungen 4 bis 8 **dadurch gekennzeichnet dass** es ausgestattet ist mit einer oder mehrerer elastischen Drehstangen (13) oder einer oder mehrerer biegbaren Platten , die auf der Drehachse angebracht sind oder in unmittelbarer Nähe , zwischen dem Untergrund und dem stabilen Dach ; das Gleichgewicht des stabilen Daches wird somit gewährleistet durch das Öffnen und Schliessen.

10. Dachzelt für Kraftfahrzeug gemäss einer beliebigen der vorhergehenden Anforderungen, befestigbar auf den Stangen des Daches des besagten Autos.

## Claims

1. A folding roof tent for motor vehicle **characterized in that** the said tent is equipped with a compartment, used in particular for luggage, whose access to is possible either from the inside of the tent, or from outside when the tent is closed.

2. A folding roof tent for motor vehicle with a rigid cover (32) that becomes the roof of the tent whenever the said folding roof tent is open, **characterized in that** the said folding roof tent has a fabric (41), and the part of the said fabric which constitutes the ceiling is located under the rigid cover (32), at a distance from the said cover sufficient to allow airflow between the fabric that constitutes the ceiling and the said cover, the said fabric which constitutes the ceiling comprises a large opening fitted with a mosquito net, the said large opening fitted with a mosquito net is adjustable by means of a flap of fabric in order to control aeration of the said folding roof tent and avoid condensation of the inside humidity on the fabric's wall of the said folding roof tent.

3. A folding roof tent for motor vehicle as claimed in claim 1 **characterized in that** the said compartment can be located at the opposite side or on one of the side of the entrance of said folding roof tent.

4. A folding roof tent for motor vehicle as claimed in claims 1 and 3 **characterized in that** the said folding roof tent comprises a rigid cover (2,32), a base (1, 31) and a cover for the compartment (3,34)

5. A folding roof tent for motor vehicle as claimed in claims 1,3 and 4, **characterized in that** the said folding roof tent is equipped with a U shape plate (4), attached to the base (1) which ensures straightness of the compartment, and also has a function of gutter between the tent cover (2) and the compartment's cover (3) when closed

6. A folding roof tent for motor vehicle as claimed in claims 1, 3, 4 and 5 **characterized in that** the said folding roof tent includes a rigid cover (2), rotating towards the front when carrying out the opening/closing, with a rotation of about 200° around an horizontal axis, located at the frort of the roof, this cover drives in its motion the deployment of the side panels, and the ceiling panel of the tent, creating a large liveable space located over the roof and the bonnet of the vehicle.

7. A folding roof tent for motor vehicle as claimed in claims 1, 3, 4, 5 and 6 **characterized in that** the said folding roof tent is equipped with a shoe (14) whose function of bracket ensures laying the cantilever weight of base (1) onto the vehicle windshield.

8. A folding roof tent for motor vehicle as claimed in claims 1, 2, 3 and 4 **characterized in that** the rigid cover (32) rises over the base (31) when the opening or closing manoeuvre is carried out by the means of four brackets, two of them in the shape of compass (38), thus constituting the roof of the tent, and at the same time the folding floor (35) whose area dimension is similar to the base deploys out on one side at an angle of 180°, resting on an access ladder (39), driving, **in that** motion, the deployment of side panels (41), and making a floor at the same level than the base (31), the opened assembly offering a volume sufficient for two persons to sleep.

9. A folding roof tent for motor vehicle as claimed in any of claims 4 to 8 **characterized in that** the said folding roof tent is equipped with one or several spring torsion bars (13) or one or several flexion plates set on, or near, the rotation axis between base and rigid cover, ensuring part of the balancing of the weight of the rigid cover and the accessories, when opening or closing of the tent is carried out.

10. A folding roof tent for motor vehicle as claimed in any one of claims 1 to 9, attachable on roof bars of aforesaid vehicle.
